# EUROPÄISCHE PATENTSCHRIFT

(11) **EP 2 851 655 B1**
(45) Veröffentlichungstag und Bekanntmachung des Hinweises auf die Patenterteilung: **04.05.2016**
(21) Anmeldenummer: 14172534.1
(22) Anmeldetag: 16.06.2014
(51) Int. Cl.: G01D 5/20

(54) **Induktive Positionsmesseinrichtung**
Inductive position measurement device
Dispositif de mesure de position inductif

(30) Priorität: 19.09.2013 DE 102013218768
(43) Veröffentlichungstag der Anmeldung: 25.03.2015
(73) Patentinhaber: Dr. Johannes Heidenhain GmbH, 83301 Traunreut (DE)
(72) Erfinder: Tiemann, Marc Oliver, 5020 Salzburg (AT); Heumann, Martin, 83278 Traunstein (DE); Frank, Alexander, 83377 Vachendorf (DE)

(56) Entgegenhaltungen:
- EP-A2- 2 182 329
- EP-A2- 2 549 239
- EP-A2- 2 554 949
- EP-A2- 2 581 711
- US-A1- 2010 241 383

## Beschreibung

### GEBIET DER TECHNIK

Induktive Positionsmesseinrichtungen dienen zur Bestimmung der Position zweier zueinander bewegbarer Bauteile. Sie werden beispielsweise als Drehgeber zur Bestimmung der Winkellage zweier relativ zueinander drehbaren Maschinenteile oder als Längenmesssystem zur direkten Messung von Längsverschiebungen entlang einer Achse verwendet.

Derartige induktive Positionsmesseinrichtungen werden als Messgeräte für elektrische Antriebe, zur Bestimmung der Relativbewegung bzw. der Relativlage von entsprechenden Maschinenteilen, eingesetzt. In diesem Fall werden die erzeugten Positionswerte einer Folgeelektronik zur Ansteuerung der Antriebe über eine entsprechende Schnittstellenanordnung zugeführt. Man unterscheidet zwischen inkrementalen Positionsmesseinrichtungen und absoluten Positionsmesseinrichtungen, wobei vermehrt absolute Positionsmesseinrichtungen eingesetzt werden.

### STAND DER TECHNIK

Eine gattungsgemäße induktive Positionsmesseinrichtung ist aus der US 5,886,519 bekannt. Eine derartige induktive Positionsmesseinrichtung weist einen Maßstab und eine relativ dazu bewegbare Abtasteinheit auf. Der Maßstab weist zur absoluten Positionsmessung mehrere parallel zueinander verlaufende Teilungsspuren geringfügig unterschiedlicher Teilungsperiode auf. Jede dieser Teilungsspuren besitzt in periodischen Abständen alternierend angeordnete elektrisch leitfähige und nicht leitfähige Flächen bzw. Stege und Lücken. Die Abtasteinheit umfasst zur Abtastung der Teilungsspuren Erregerspulen und Empfängerspulen in Form von Leiterbahnen auf einem gemeinsamen Träger. Wenn an den Erregerspulen ein zeitlich wechselnder elektrischer Erregerstrom angelegt wird, werden in den Empfängerspulen von der Relativposition abhängige Abtastsignale erzeugt. Diese Abtastsignale werden dann in einer Auswerteeinheit weiterverarbeitet um daraus eine Absolutposition zu ermitteln. Die Absolutposition wird aus einem Schwebungssignal gebildet, das durch Vergleich der Phasenlagen der Abtastsignale der zwei Teilungsspuren abgeleitet wird.

Bei der US 5,886,519 entspricht jeweils die Periode der Empfängerspulen der Teilungsperiode der ihr bei der Abtastung zugeordneten Teilungsspur.

### ZUSAMMENFASSUNG DER ERFINDUNG

Der Erfindung liegt die Aufgabe zugrunde, eine induktive Positionsmesseinrichtung zu schaffen, die kostengünstig herstellbar und flexibel einsetzbar ist und mit der eine präzise Absolutposition ermittelt werden kann.

Diese Aufgabe wird erfindungsgemäß durch die Merkmale des Anspruches 1 gelöst.

Die induktive Positionsmesseinrichtung umfasst demnach einen Maßstab mit zumindest einer in Messrichtung verlaufenden ersten Teilungsspur, welche Markierungen mit einer ersten Teilungsperiode aufweist und eine parallel dazu verlaufende zweite Teilungsspur, welche Markierungen mit einer zweiten Teilungsperiode aufweist, wobei die erste Teilungsperiode von der zweiten Teilungsperiode geringfügig abweicht.

Die induktive Positionsmesseinrichtung umfasst weiterhin eine Abtasteinheit mit einer ersten Empfängerspule mit einer ersten Periode zur Abtastung der ersten Teilungsspur und Erzeugung eines ersten periodischen Abtastsignals entsprechend der ersten Teilungsperiode und eine zweite Empfängerspule mit einer zweiten Periode zur Abtastung der zweiten Teilungsspur und Erzeugung eines zweiten periodischen Abtastsignals entsprechend der zweiten Teilungsperiode. Erfindungsgemäß ist die erste Periode der ersten Empfängerspule identisch mit der zweiten Periode der zweiten Empfängerspule.

Die induktive Positionsmesseinrichtung umfasst weiterhin eine Auswerteeinheit, die dazu ausgelegt ist die Phasenlage des ersten Abtastsignals und die Phasenlage des zweiten Abtastsignals zu ermitteln und aus diesen Phasenlagen eine eindeutige bzw. einmalige Absolutposition innerhalb eines Messbereichs mehrerer erster und zweiter Teilungsperioden zu bilden. Bei der Erfindung wird also zur Bildung der Absolutposition das Schwebungs- bzw. das Nonius-Prinzip ausgenutzt.

Die Phasenlagen der beiden Abtastsignale werden in bekannter Weise durch Interpolation gewonnen.

Vorteilhaft ist, wenn innerhalb eines absolut zu erfassenden Messbereichs eine gerade Anzahl von Teilungsperioden der ersten Teilungsspur und eine ungerade Anzahl von Teilungsperioden der zweiten Teilungsspur angeordnet sind, insbesondere unterscheidet sich innerhalb des Messbereichs die Anzahl der Teilungsperioden der ersten Teilungsspur von der Anzahl der Teilungsperioden der zweiten Teilungsspur um 1.

Die Teilungsspuren der induktiven Positionsmesseinrichtung sind induktiv abtastbar. Jede Teilungsspur besteht aus einer Abfolge voneinander beabstandeter elektrisch gut leitfähiger Markierungen. Jeder der Teilungsspuren ist in der Abtasteinheit eine Erregerspule und eine Empfängerspule zugeordnet, wobei jeder Empfängerspule eine eigene Erregerspule zugeordnet sein kann oder mehreren Empfängerspulen eine gemeinsame Erregerspule zugeordnet sein kann. Diese Spulen sind flächig auf einem Träger angeordnet. Beim Betrieb der induktiven Positionsmesseinrichtung generiert ein an der Erregerspule eingeprägter Erregerstrom ein wechselndes elektromagnetisches Erregerfeld, das durch die Anordnung der Markierungen positionsabhängig beeinflusst wird, wodurch in der Empfängerspule ein positionsabhängiges Abtastsignal induziert wird.

Die induktive Positionsmesseinrichtung gemäß der Erfindung kann als Längenmesseinrichtung oder als Winkelmesseinrichtung ausgebildet sein.

In vorteilhafter Weise weist der Maßstab mehr als zwei Teilungsspuren auf. Insbesondere weist der Maßstab zumindest eine weitere Teilungsspur auf, deren Teilungsperiode von der Teilungsperiode der ersten Teilungsspur sowie von der Teilungsperiode der zweiten Teilungsspur jeweils geringfügig abweicht, und weist die Abtasteinheit zumindest eine weitere Empfängerspule mit einer Periode zur Abtastung der weiteren Teilungsspur und Erzeugung eines weiteren Abtastsignals auf. Dabei entspricht die Periode der weiteren Empfängerspule der ersten Periode und der zweiten Periode.

Bei der erfindungsgemäßen Ausgestaltung ergibt sich somit zumindest bei einer der Teilungsspuren eine Abweichung (Mismatch) zwischen der Teilungsperiode dieser Teilungsspur und der Periode der dieser Teilungsspur zugeordneten Empfängerspule. Bevorzugt gilt dabei, dass die Anzahl N der Perioden, die zur Generierung jeweils eines Abtastsignals gleichzeitig abgetastet werden derart gewählt wird, dass bei einem gegebenen Mismatch der Amplitudenverlust des Abtastsignals aufgrund des Mismatch (im Vergleich ohne Mismatch) kleiner 40% ist.

Insbesondere gilt:
- die Anzahl N der Perioden zur Generierung des Abtastsignales ist: 1 < N < 50, und
- die Periode der Empfängerspule weicht von der Teilungsperiode dieser Empfängerspule zugeordneten Teilungsspur um maximal 1% ab.

Die Abtasteinheit ist vorzugsweise derart ausgestaltet, dass die den mehreren Teilungsspuren zugeordneten Empfängerspulen gleicher Perioden symmetrisch zu einer parallel zur Messrichtung X verlaufenden Symmetrielinie angeordnet sind.

Zur optimalen Nutzung des zur Verfügung stehenden Platzes bei einem derartigen symmetrischen Aufbau kann die Abtasteinheit eine Empfängerspule aufweisen, die in der Symmetrielinie angeordnet ist. Die Periode der in der Symmetrielinie angeordneten Empfängerspule kann von den Perioden der ersten Empfängerspule und der zweiten Empfängerspule abweichen. So kann die Periode der in der Symmetrielinie angeordneten Empfängerspule mit der Teilungsperiode der ihr zugeordneten Teilungsspur übereinstimmen. Die in der Symmetrielinie angeordnete Teilungsspur kann auch ein serieller Code (auch PRC genannt) mit in Messrichtung angeordneten Codeelementen sein, wobei die Periode der Empfängerspule dann beispielsweise der Breite eines dieser Codeelemente entspricht.

Zur vorteilhaften Nutzung des symmetrischen Aufbaus ist in vorteilhafter Weise eine Umschalteinrichtung zur wahlweisen Umschaltung der Verarbeitung der Abtastsignale von einer ersten Betriebsweise in eine zweite Betriebsweise vorgesehen, wobei in der ersten Betriebsweise die Abtasteinheit in einer ersten Lage relativ zum Maßstab ausgerichtet ist, in der die erste Empfängerspule der ersten Teilungsspur und die zweite Empfängerspule der zweiten Teilungsspur zur Abtastung zugeordnet sind und in der zweiten Betriebsweise die Abtasteinheit gegenüber der ersten Lage um 180° derart verschwenkt ist, dass die erste Empfängerspule der zweiten Teilungsspur und die zweite Empfängerspule der ersten Teilungsspur zur Abtastung zugeordnet sind.

Die Umschalteinrichtung kann verschiedenartig ausgestaltet sein, so dass die Umschaltung durch manuellen Eingriff erfolgt oder automatisiert. Zur automatisierten Umschaltung kann sie dazu ausgelegt sein, die erste und zweite Lage der Abtasteinheit durch Auswertung von Abtastsignalen der Abtasteinheit zu detektieren.

Zur automatisierten Umschaltung können zumindest einer der Teilungsspuren mehrere in Messrichtung zueinander versetzte Empfängerspulen-Abschnitte zugeordnet sein, von denen jede ein Abtastteilsignal generiert. In diesem Fall ist die Umschalteinrichtung dazu ausgelegt aus diesen Abtastteilsignalen die erste und zweite Lage der Abtasteinheit zu detektieren.

Eine weitere vorteilhafte Ausgestaltung ergibt sich, wenn der Maßstab zwei senkrecht zur Messrichtung voneinander beabstandete Teilungsspuren umfasst, welche die gleichen Teilungsperioden aufweisen und die Abtasteinheit Empfängerspulen zur Generierung zweier Abtastsignale gleicher Signalperioden aufweist. Bei dieser Ausgestaltung kann die Auswerteeinheit dazu ausgelegt sein um aus den zwei Abtastsignalen gleicher Signalperioden ein Maß für die Winkellage der Abtasteinheit gegenüber dem Maßstab zu ermitteln.

Die Auswerteeinheit und die Umschalteinrichtung bilden vorzugsweise mit der Abtasteinheit eine gemeinsame Baueinheit.

Vorteilhafte Ausbildungen der Erfindung entnimmt man den abhängigen Ansprüchen.

### KURZE BESCHREIBUNG DER ZEICHNUNGEN

Einzelheiten und Vorteile der erfindungsgemäßen induktiven Positionsmesseinrichtung ergeben sich aus der nachfolgenden Beschreibung von Ausführungsbeispielen anhand der beiliegenden Figuren.

### Es zeigen

- Figur 1: eine erste induktive Positionsmesseinrichtung gemäß der Erfindung;
- Figur 2: die Abhängigkeit der Amplitude AM eines Abtastsignals A2 in Abhängigkeit von der Anzahl N der Perioden einer Empfängerspule bei einem gegebenen Mismatch von 1%;
- Figur 3: eine erste mögliche Ausrichtung der Abtasteinheit gegenüber dem Maßstab der induktiven Positionsmesseinrichtung gemäß Figur 1;
- Figur 4: eine zweite mögliche Ausrichtung der Abtasteinheit gegenüber dem Maßstab der induktiven Positionsmesseinrichtung gemäß Figur 1;
- Figur 5: eine Ausgestaltung der induktiven Positionsmesseinrichtung zur wahlweisen Umschaltung der Auswerteeinheit;
- Figur 6: eine zweite induktive Positionsmesseinrichtung gemäß der Erfindung;
- Figur 7: eine erste mögliche Ausrichtung der Abtasteinheit gegenüber dem Maßstab der induktiven Positionsmesseinrichtung gemäß Figur 6;
- Figur 8: eine zweite mögliche Ausrichtung der Abtasteinheit gegenüber dem Maßstab der induktiven Positionsmesseinrichtung gemäß Figur 6, und
- Figur 9: eine Einrichtung zur wahlweisen Umschaltung der Auswerteeinheit der induktiven Positionsmesseinrichtung gemäß Figur 6.

### BESCHREIBUNG DER AUSFÜHRUNGSFORMEN

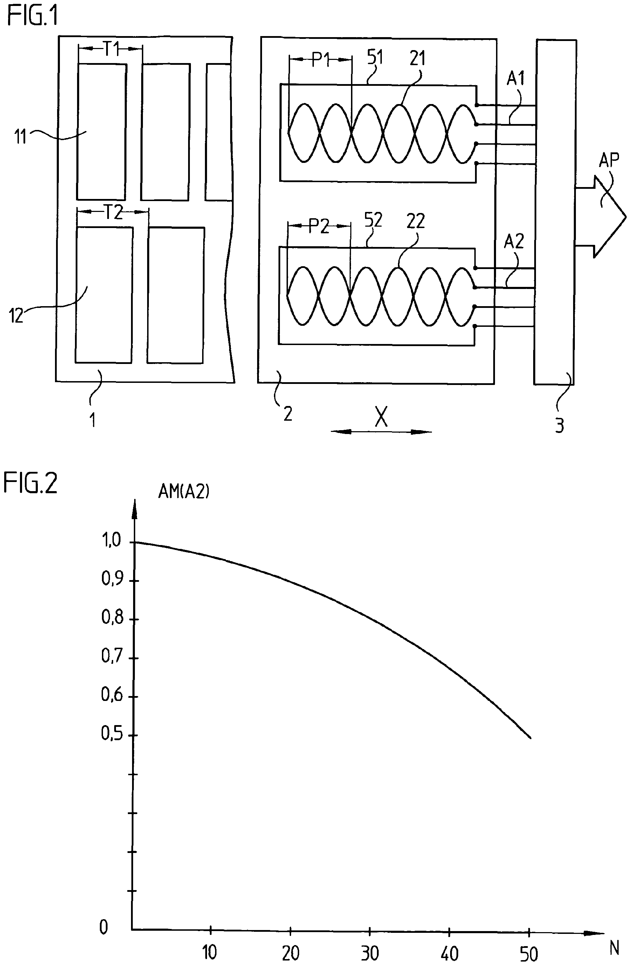

Die Figur 1 zeigt einen Maßstab 1 mit zwei in Messrichtung X verlaufenden Teilungsspuren 11 und 12. Die erste Teilungsspur 11 weist Markierungen mit einer ersten Teilungsperiode T1 auf und die zweite Teilungsspur 12 weist Markierungen mit einer zweiten Teilungsperiode T2 auf. Die periodisch angeordneten Markierungen der beiden Teilungsspuren 11, 12 sind induktiv abtastbar ausgestaltet. Hierzu bestehen die Teilungsspuren 11, 12 jeweils aus einer periodischen Abfolge von in Messrichtung X voneinander beabstandeten elektrisch leitfähigen Markierungen. Im dargestellten Ausführungsbeispiel sind diese Markierungen flächige Rechtecke. Die Teilungsperiode T1 der ersten Teilungsspur 11 und die Teilungsperiode T2 der zweiten Teilungsspur 12 weichen nur geringfügig voneinander ab, so dass daraus eine Absolutposition AP über mehrere dieser Teilungsperioden T1, T2 abgeleitet werden kann.

Die induktive Positionsmesseinrichtung umfasst darüber hinaus eine Abtasteinheit 2 zur Abtastung der beiden Teilungsspuren 11 und 12. Die Abtasteinheit 2 weist zur Abtastung der ersten Teilungsspur 11 eine erste Erregerwindung 51 und eine erste Empfängerspule 21 und zur Abtastung der zweiten Teilungsspur 12 eine zweite Erregerwindung 52 und eine zweite Empfängerspule 22 auf. Die erste Empfängerspule 21 umfasst mehrere in Messrichtung X verlaufende erste Perioden P1 zur gleichzeitigen Abtastung mehrerer in Messrichtung X angeordneter Teilungsperioden T1 und zur Bildung eines ersten Abtastsignals A1 mit der Signalperiode T1. Die zweite Empfängerspule 22 umfasst mehrere in Messrichtung X verlaufende zweite Perioden P2 zur gleichzeitigen Abtastung mehrerer in Messrichtung X angeordneter Teilungsperioden T2 und zur Bildung eines zweiten Abtastsignals A2 mit der Signalperiode T2. Die Abtastsignale A1, A2 werden in bekannter Weise generiert, indem das von der Erregerspule 51, 52 generierte Erregerfeld in den elektrisch leitfähigen Markierungen der Teilungsspuren 11, 12 Wirbelströme generiert, die als Gegenfeld gegen das Erregerfeld wirken. In den Empfängerspulen 21, 22 werden aufgrund des ihnen zugeordneten Erregerfeldes eine Spannung induziert, die von der relativen Lage zu den Markierungen abhängig ist. Die in den Empfängerspulen 21, 22 induzierte Spannung variiert positionsabhängig und bildet entsprechend das Abtastsignal A1, A2.

Die beiden Abtastsignale A1 und A2 geringfügig unterschiedlicher Signalperioden P1 und P2 liegen an einer Auswerteeinheit 3 an, welche dazu konfiguriert ist die Phasenlage des ersten Abtastsignals A1 und die Phasenlage des zweiten Abtastsignals A2 zu ermitteln und daraus die Absolutposition AP über mehrere erste und zweite Teilungsperioden T1, T2 zu bilden. Aus dem Vergleich der Phasenlagen beider Abtastsignale A1 und A2 resultiert in bekannter Weise ein Schwebungssignal, das die eindeutige Absolutposition AP angibt. Der mit den beiden Abtastsignalen A1, A2 absolut zu codierende Messbereich ist in bekannter Weise abhängig von dem gewählten Unterschied der beiden Teilungsperioden T1, T2. Über den gesamten absolut zu codierenden Messbereich unterscheidet sich die Anzahl der Teilungsperioden T1 und die Anzahl der Teilungsperioden T2 um 1. Ist beispielsweise T1=800 µm und T2=800,024 µm, so ist auch die Signalperiode des ersten Abtastsignals A1=800 µm und die Signalperiode des zweiten Abtastsignals A2=800,024 µm. Der damit absolut zu codierende Messbereich (Weglänge) ist 32.768 x T1=32.767 x T2=26214400 µm.

Die aktuellen Phasenlagen der beiden Abtastsignale A1 und A2 werden in bekannter Weise ermittelt. In allen Figuren ist zur Abtastung einer Teilungsspur 11, 12 jeweils nur eine Empfängerspule 21, 22 dargestellt. Tatsächlich umfasst die Abtasteinheit 2 für jede der Teilungsspuren 11, 12 mehrere gegeneinander jeweils um einen Bruchteil der jeweiligen Teilungsperiode T1, T2 versetzte Empfängerspulen, um mehrere gegeneinander phasenverschobene Abtastsignale zu generieren, die in bekannter Weise interpoliert werden.

Die erste Empfängerspule 21 weist eine Periode P1 auf, die gleich der Periode P2 der zweiten Empfängerspule 22 ist. Indem die Abtasteinheit 2 Empfängerspulen 21, 22 mit gleichen Perioden P1=P2 aufweist, ist einerseits eine standardisierte Fertigung der Abtasteinheit 2 möglich und andererseits auch eine flexible Verwendung dieser Abtasteinheit 2.

Eine erfindungsgemäß ausgestaltete Abtasteinheit 2 kann Maßstäben 1 mit Teilungsspuren 11, 12 mit verschiedenen Differenzen der Teilungsperioden T1, T2 zugeordnet werden. Soll beispielsweise ein absoluter Messbereich von nur 1024 x T1=819200 µm eindeutig erfasst werden, kann die Teilungsperiode T2=800,782 µm gewählt werden. Für die Anzahl der Teilungsperioden T2 innerhalb dieses Messbereichs ergibt sich damit 1023 und für die Anzahl der Teilungsperioden T1 1024.

Bei der Erfindung wird die Erkenntnis ausgenutzt, dass sich bei einem Mismatch der Teilungsperiode T2 der zweiten Teilungsspur 12 in Bezug zu der Periode P2 der diese zweite Teilungsspur 12 abtastenden Empfängerspule 22 die Amplitude AM des Abtastsignals A2 nur derart verringert, dass diese noch gut auswertbar ist. Die Verringerung der Amplitude AM des Abtastsignals A2 bei einem Mismatch von etwa 1 % ist in der Figur 2 schematisch dargestellt. Es ist ersichtlich, dass die Verringerung der Amplitude AM des Abtastsignals A2 nicht nur von der Größe des Mismatch abhängig ist, sondern auch von der Anzahl N der zur Bildung des Abtastsignals A2 verwendeten Perioden P2 der Empfängerspule 12. Je mehr Perioden P2 zur Bildung des Abtastsignals A2 beitragen, desto höher ist die absolute Amplitude AM, bei Betrachtung ohne Mismatch. Aus der Figur 2 ergibt sich, dass bei einem Mismatch von etwa 1% bis zu etwa 50 in Messrichtung X hintereinander angeordnete Perioden P2 der Empfängerspule 12 zur Bildung des Abtastsignals A2 beitragen dürfen, um eine Amplitudenverringerung von maximal 40%, also eine noch akzeptable Amplitude AM, zu erhalten.

Als besonders vorteilhaft haben sich folgende Ausgestaltungen herausgestellt:
- die Anzahl N der Perioden zur Generierung des Abtastsignales ist: 1 < N < 50, und
- die Periode der Empfängerspule weicht von der Teilungsperiode dieser Empfängerspule zugeordneten Teilungsspur um maximal 1% ab.

### Allgemein ausgedrückt gilt:

Die Anzahl N der Perioden, die zur Generierung jeweils eines Abtastsignals gleichzeitig abgetastet werden wird derart gewählt, dass bei einem gegebenen Mismatch der Amplitudenverlust des Abtastsignals aufgrund des Mismatch (im Vergleich ohne Mismatch) kleiner 40% ist.

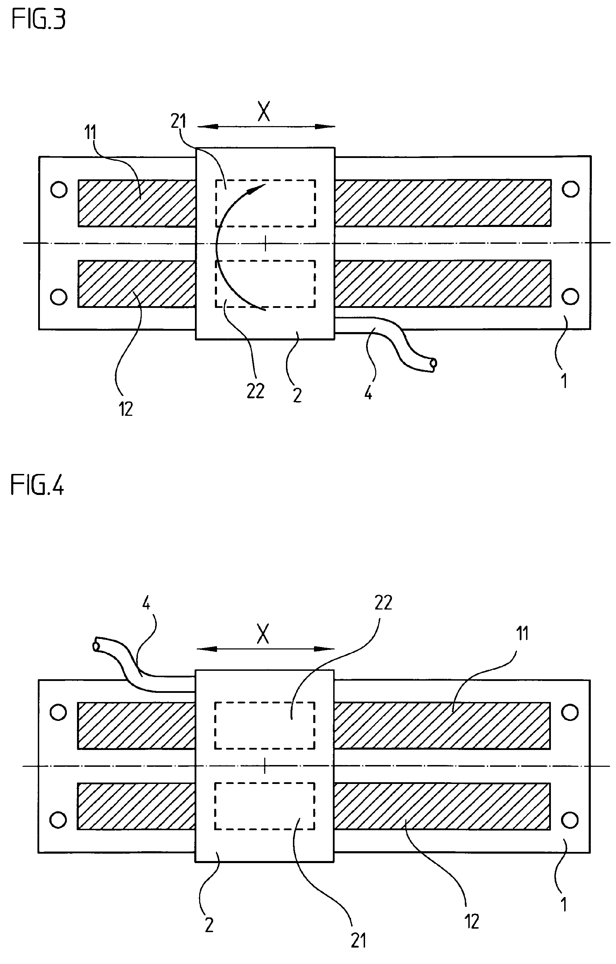

Die Erfindung erlaubt auch eine flexible Verwendung der Abtasteinheit 2, wie anhand der Figuren 3 bis 5 erläutert werden soll.

Die in der Abtasteinheit 2 gewonnene Absolutposition AP wird üblicherweise kabelgebunden an eine Folgeelektronik übertragen. Hierzu weist die Abtasteinheit 2 einen Kabelausgang 4 auf. Die Erfindung ermöglicht nun die Zuordnung der Abtasteinheit 2 zu den Teilungsspuren 11 und 12 des Maßstabs 1 in zwei unterschiedlichen Orientierungen bzw. Ausrichtungen.

Figur 3 zeigt eine erste Möglichkeit der Ausrichtung der Abtasteinheit 2 gegenüber dem Maßstab 1, bei der die erste Empfängerspule 21 der ersten Teilungsspur 11 zugeordnet ist und diese zur Gewinnung des ersten Abtastsignals A1 der Signalperiode T1 abtastet, und bei der die zweite Empfängerspule 22 der zweiten Teilungsspur 12 zugeordnet ist und diese zur Gewinnung des zweiten Abtastsignals A2 der Signalperiode T2 abtastet.

Figur 4 zeigt eine durch die Erfindung ermöglichte zweite Ausrichtung der Abtasteinheit 2 gegenüber dem Maßstab 1. Dabei ist die Abtasteinheit 2 gegenüber dem Maßstab 1 um 180° gedreht angeordnet (die Drehrichtung ist in Figur 3 durch den eingezeichneten Pfeil angedeutet). Bei dieser Ausrichtung ist die erste Empfängerspule 21 der zweiten Teilungsspur 12 zugeordnet und tastet diese zur Gewinnung des zweiten Abtastsignals A2 mit der Teilungsperiode T2 ab. Dagegen ist die zweite Empfängerspule 22 der ersten Teilungsspur 11 zugeordnet und tastet diese zur Gewinnung des ersten Abtastsignals A1 mit der Teilungsperiode T1 ab.

Die gleichartige Ausgestaltung der Empfängerspulen 21, 22 erlaubt somit zwei unterschiedliche Anbaulagen der Abtasteinheit 2, womit die Richtung des Kabelausgangs 4 entsprechend den Platzverhältnissen flexibel gewählt werden kann, wie in den Figuren 3 und 4 ersichtlich ist.

Wird die vom Kunden gewünschte Anbaulage bereits beim Hersteller der induktiven Positionsmesseinrichtung fest vorgegeben, ist die Auswerteeinheit 3 bereits vom Hersteller entsprechend angepasst ausgestaltet. Soll die Ausrichtung der Abtasteinheit 3 vom Kunden (Anwender) frei wählbar sein, ist es erforderlich auch die Auswerteeinheit 3 entsprechend der möglichen Ausrichtungen konfigurieren zu können.

Zur Konfiguration der Auswerteeinheit 3 in Abhängigkeit der gewählten Ausrichtung der Abtasteinheit 2 relativ zum Maßstab 1 gibt es mehrere Möglichkeiten. Eine Möglichkeit besteht darin, dass die Auswerteeinheit 3 entsprechend der gewählten Ausrichtung in zwei unterschiedlichen Betriebsweisen zur Verarbeitung der beiden Abtastsignale A1 und A2 programmiert wird. Die Information über die aktuelle Ausrichtung kann der Auswerteeinheit 3 vom Anwender über einen mechanisch zu betätigenden Schalter mitgeteilt werden oder von der Auswerteeinheit 3 selbst ermittelt werden. Bei der selbsttätigen Ermittlung wird die aktuelle Ausrichtung durch Abtastung einer auf dem Maßstab 1 vorhandenen Information erkannt. Diese Information auf dem Maßstab 1 kann ein Magnet sein, der von einem Sensor der Abtasteinheit 2 detektiert wird. Die auf dem Maßstab 1 vorhandene Information zur Erkennung der aktuellen Ausrichtung der Abtasteinheit 2 relativ zum Maßstab 1 kann aber auch von den Teilungsspuren 11, 12 selbst gebildet sein, indem die Abtasteinheit 2 bzw. die Auswerteeinheit 3 die unterschiedlichen Teilungsperioden T1, T2 der Teilungsspuren 11, 12 durch Abtastung - insbesondere durch Auswertung der aktuellen Phasenlage der Abtastsignale A1, A2 bei Relativbewegung - erkennt und die dazu passende Betriebsweise der Auswerteeinheit 3 entsprechend auswählt.

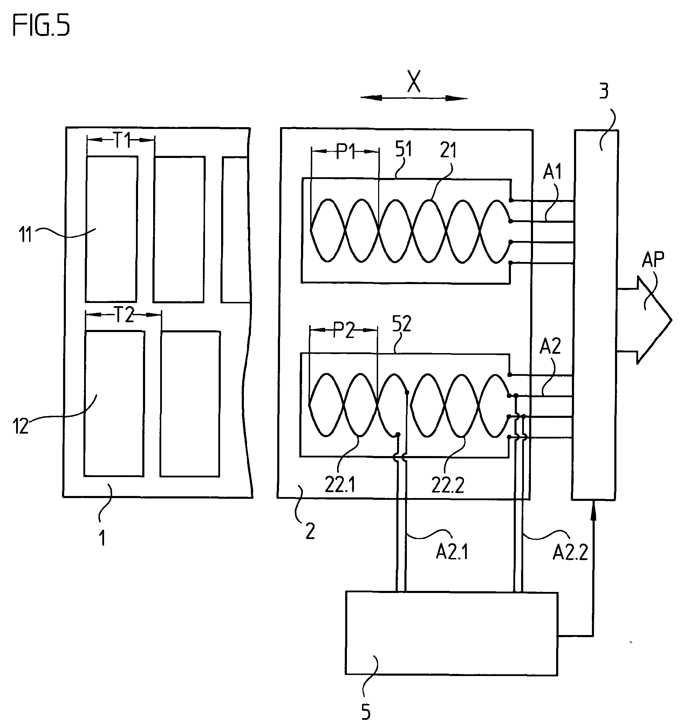

In der Figur 5 ist ein Ausführungsbeispiel hierzu dargestellt. Zumindest eine der Empfängerspulen 21, 22 - im Ausführungsbeispiel die Empfängerspule 22 - ist in mehrere in Messrichtung X versetzte Abschnitte 22.1 und 22.2 unterteilt. Das Abtastsignal A2.1 des einen Abschnitts 22.1 und das Abtastsignal A2.2 des anderen Abschnitts 22.2 werden einer Umschalteinrichtung 5 zugeführt, welche die Phasenlage der beiden Abtastsignale A2.1 und A2.2 bestimmt und daraus die aktuelle Ausrichtung der Abtasteinheit 2 erkennt und die Auswerteeinheit 3 abhängig davon in die korrekte Betriebsweise umschaltet. Die Phasenlage bzw. Phasenverschiebung der beiden Abtastsignale A2.1 und A2.2 ist proportional zur Teilungsperiode T2 der ihr gegenüberliegenden Teilungsspur 12, so dass daraus eindeutig abgeleitet werden kann, ob die Abschnitte 22.1 und 22.2 der Teilungsspur 11 oder der Teilungsspur 12 zugeordnet sind. Die Abschnitte 22.1 und 22.2 bilden gemeinsam die Empfängerspule 22 und das Abtastsignal A2 ist die Summe der Abtastsignale A2.1 und A2.2.

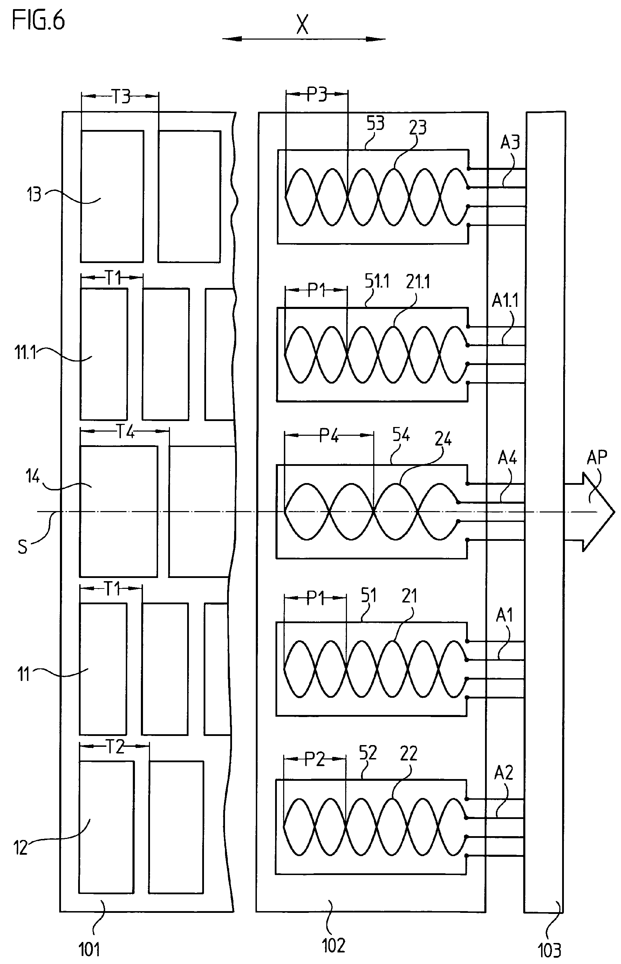

Anhand der Figuren 6 bis 9 wird nachfolgend ein weiteres Ausführungsbeispiel der Erfindung erläutert. Die induktive Positionsmesseinrichtung gemäß dem ersten Ausführungsbeispiel wurde ergänzt, um einerseits ein Maß für die Winkellage der Abtasteinheit 102 gegenüber dem Maßstab 101 zu ermitteln und um andererseits zusätzlich innerhalb des absolut zu messenden Messbereichs abschnittsweise weitere Absolutpositionen ermitteln zu können, was die Zuverlässigkeit der absoluten Positionsmessung erhöht.

Zur Ermittlung eines Maßes für die Verkippung der Abtasteinheit 102 gegenüber dem Maßstab 101 - auch Moiréwinkel genannt - ist der ersten Teilungsspur 11 eine zusätzliche erste Teilungsspur 11.1 mit der Teilungsperiode T1 zugeordnet. Diese Teilungsspur 11.1 ist senkrecht zur Messrichtung X von der ersten Teilungsspur 11 beabstandet. Die Abtasteinheit 102 weist eine Erregerspule 51.1 und eine Empfängerspule 21.1 mit der Periode P1 zur Abtastung der Teilungsspur 11.1 auf. Bei der Abtastung der Teilungsspur 11.1 generiert die Empfängerspule 21.1 ein Abtastsignal A1.1. Die Verkippung (Schrägstellung um eine in die Zeichenebene der Figur 6 weisende Drehachse) der Abtasteinheit 102 relativ zum Maßstab 101 wird durch Vergleich der beiden Abtastsignale A1 und A1.1 gewonnen. Dieses aktuelle Maß der Winkellage kann in der Auswerteeinheit 103 zur Korrektur der mit der Abtasteinheit 102 gewonnenen Abtastsignale A2, A3 oder der daraus ermittelten Absolutposition AP verwendet werden.

Das Abtastsignal A1.1 kann zusätzlich oder alternativ dazu verwendet werden, um auch das Abtastsignal A1 zu korrigieren, beispielsweise kann das korrigierte Abtastsignal A1 durch Mittelung der beiden Abtastsignale A1 und A1.1 gewonnen werden.

In bekannter Weise ist der absolut zu erfassende Messbereich bestimmt durch den Unterschied der Signalperioden der Abtastsignale, deren Phasenlagen miteinander verglichen werden. Je kleiner der Unterschied der Signalperioden, umso größer ist der absolut zu erfassende Messbereich. Im gezeigten Ausführungsbeispiel wird der maximale absolute Messbereich bestimmt durch die beiden Abtastsignale A1 und A2 und somit durch die beiden Teilungsspuren 11 und 12. Mit der aus diesen beiden Abtastsignalen A1 und A2 gewonnenen Absolutposition muss eine Teilungsperiode T1 der Teilungsspur 11 eindeutig bestimmbar sein. Im Ausführungsbeispiel wäre dies eine Teilungsperiode T1 innerhalb von 32.768 Teilungsperioden T1. Um diese eindeutige Bestimmung zu erleichtern, ist es vorteilhaft, wenn der maximale Messbereich weiter in mehrere absolute Messbereiche unterteilt wird und somit mit der aus den Abtastsignalen A1 und A2 gewonnenen Absolutposition nur einer dieser absoluten Messbereiche eindeutig bestimmt werden muss. Im dargestellten Ausführungsbeispiel ist hierzu eine dritte Teilungsspur 13 mit der Teilungsperiode T3 vorgesehen. Zur Abtastung dieser Teilungsspur 13 umfasst die Abtasteinheit 102 eine Erregerspule 53 und eine Empfängerspule 23. Die Teilungsperiode T3 weicht von der Teilungsperiode T1 wiederum nur geringfügig ab. Die Periode P3 der dritten Empfängerspule 23 entspricht der Periode P1 der ersten Empfängerspule 21, somit liegt zwischen der Teilungsperiode T1 und der Periode P3 ebenfalls ein Mismatch vor. Der Mismatch ist aber wiederum derart, dass dadurch (im Vergleichohne Mismatch) die Amplitude des Abtastsignals A3 mit der Signalperiode T3 nur geringfügig (< 40%) verringert wird. Die Teilungsperioden T1 und T3 sind derart gewählt, dass durch den Vergleich der Phasenlagen beider Abtastsignale A1 und A3 innerhalb des gesamt absolut zu erfassenden Messbereichs mehrere absolute Abschnitte definiert werden können. Ausgehend von dem beim ersten Ausführungsbeispiel erwähnten Zahlenbeispiel ist die Teilungsperiode T1=800 µm; die Teilungsperiode T2=800,024 µm, und die Teilungsperiode T3=800,782 µm. Jeder der Teilungsspuren 11, 12 und 13 ist eine Empfängerspule 21, 22, 23 mit der identischen Periode P1=P2=P3=800 µm zugeordnet. Aus den Abtastsignalen A1 und A3 ergibt sich durch Phasenvergleich ein absoluter Messbereich von 819200 µm. Dieser absolute Messbereich unterteilt den gesamten Messbereich von 26214400 µm in 32 Bereiche der Länge 819200 µm.

Die induktive Positionsmesseinrichtung gemäß der Erfindung kann noch weitere Teilungsspuren und Empfängerspulen aufweisen. Diese Teilungsspuren können dazu dienen, den absoluten Messbereich noch weiter zu vergrößern oder innerhalb des durch die vorhandenen Teilungsspuren 11, 11.1, 12, 13 definierten absoluten Messbereiche in noch mehrere kleinere absolute Messbereiche zu unterteilen.

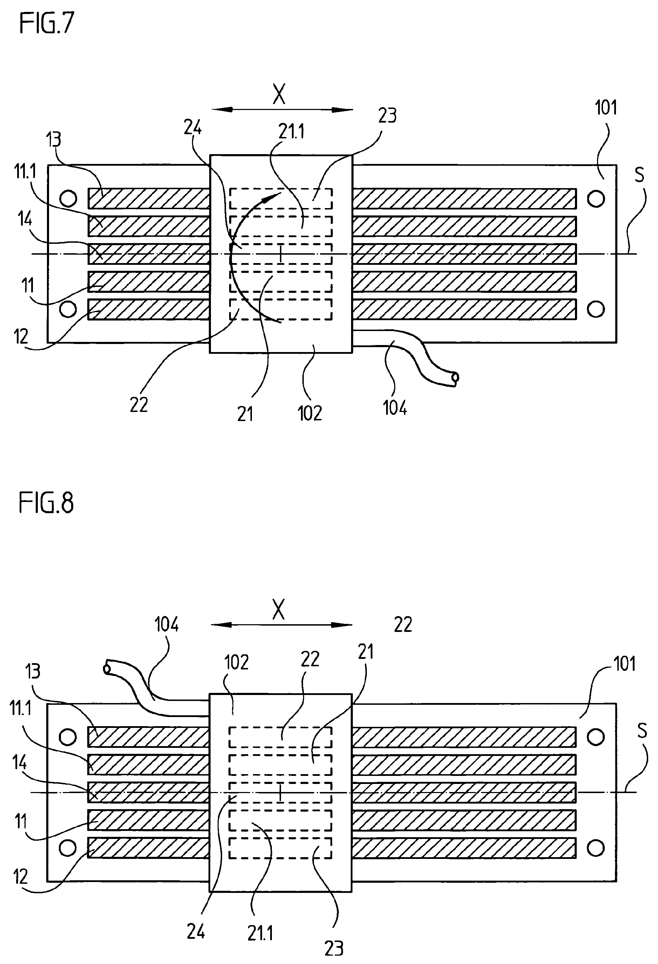

Gemäß dem Ausführungsbeispiel der Figur 6 ist eine weitere Teilungsspur - nämlich eine vierte Teilungsspur 14 - vorgesehen, welche dazu verwendet wird jeden der durch die Abtastsignale A1 und A3 gewonnenen absoluten Messbereiche in mehrere kleinere absolute Messbereiche zu unterteilen. Zur Abtastung der vierten Teilungsspur 14 mit der Teilungsperiode T4 weist die Abtasteinheit 102 eine Erregerspule 54 und eine Empfängerspule 24 auf, welche ein Abtastsignal A4 der Signalperiode T4 generiert. Die Periode P4 der Empfängerspule 24 entspricht der Teilungsperiode T4 und weicht somit von den Perioden P1, P2, P3 ab. Diese von den übrigen Empfängerspulen 21, 22, 23 abweichende Periode P4 bedingt die Anordnung der Empfängerspule 24 in der Symmetrielinie S, wenn der später noch anhand der Figuren 7 und 8 erörterte Vorteil der flexiblen Zuordnung der Abtasteinheit 102 zum Maßstab 101 genutzt werden soll.

Ausgehend von den bereits erwähnten Zahlenbeispielen ist die Teilungsperiode T4 beispielsweise 825,806 µm. Somit ergibt sich aus den Abtastsignalen A1 und A2 ein gesamter absoluter Messbereich von 26214400 µm. Aus den Abtastsignalen A1 und A3 ergibt sich ein absoluter Messbereich von 819200 µm. Dieser absolute Messbereich unterteilt den gesamten Messbereich von 26214400 µm in 32 Bereiche. Aus den Abtastsignalen A1 und A4 ergibt sich ein absoluter Messbereich von 25600 µm, der den Messbereich von 819200 µm wiederum in 32 Bereiche unterteilt. Der absolute Messbereich von 25600 µm entspricht 32 x T1. Bei diesem Beispiel wird der mit zwei Teilungsspuren 11 und 12 definierte gesamte absolute Messbereich also mittels weiterer Teilungsspuren T3, T4 in Schritten von jeweils 32 weiter unterteilt. Selbstverständlich ist dieser Unterteilungsfaktor nur beispielhaft und begrenzt die Erfindung in keinster Weise.

Auch bei dem zweiten Ausführungsbeispiel der Erfindung ergeben sich die eingangs genannten Vorteile. Einerseits kann die Abtasteinheit 102 in großen Stückzahlen kostengünstig gefertigt werden, da alle Empfängerspulen 21, 21.1, 22, 23 jeweils gleiche Perioden P1=P2=P3 aufweisen. Andererseits erlaubt die Erfindung auch unterschiedliche Zuordnungen der Abtasteinheit 102 relativ zum Maßstab 101. Bedingung hierfür ist nur eine symmetrische Anordnung der gleichartig ausgebildeten Empfängerspulen 21, 21.1, 22, 23 zu einer Symmetrielinie S. In den Figuren 7 und 8 sind die zwei möglichen Zuordnungen von Abtasteinheit 102 und Maßstab 101 schematisch dargestellt. Figur 8 zeigt die zweite Zuordnung, bei der die Abtasteinheit 102 gegenüber der in Figur 7 gezeigten ersten Zuordnung um 180° gedreht ist. Die Richtung des Kabelausgangs 104 kann somit wieder flexibel in Abhängigkeit der Platzverhältnisse gewählt werden.

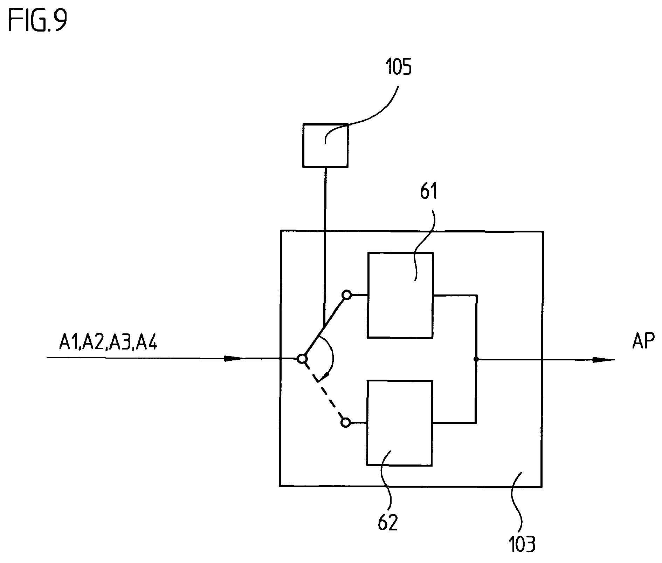

In Abhängigkeit der gewählten Zuordnung muss die Auswerteeinheit 103 entsprechend konfiguriert sein. Hierfür können die anhand des ersten Ausführungsbeispiels erläuterten Maßnahmen angewandt werden. Eine vorteilhafte Möglichkeit zur flexiblen Anpassung der Auswerteeinheit 103 wird nachfolgend anhand der Figur 9 erläutert. Der Auswerteeinheit 103 ist eine Umschalteinrichtung 105 zugeordnet, beispielsweise als Schalter ausgebildet, der abhängig von der aktuellen Zuordnung von Abtasteinheit 102 und Maßstab 101 die Abtastsignale A1, A2, A3, A4 in einer ersten Betriebsweise oder in einer zweiten Betriebsweise verarbeitet. Zur Verdeutlichung der beiden verschiedenen Betriebsweisen sind in Figur 9 schematisch zwei Blöcke 61 und 62 eingezeichnet, die als Software oder als Schaltungen ausgeführt sein können. In der dargestellten Schalterstellung werden die Abtastsignale A1, A2, A3, A4 nach der im Block 61 vorgegebenen Betriebsweise verarbeitet und in der zweiten gestrichelt dargestellten Betriebsweise werden die Abtastsignale A1, A2, A3 A4 nach der im Block 62 vorgegebenen Betriebsweise verarbeitet.

## Patentansprüche

1. Induktive Positionsmesseinrichtung, mit
- einem Maßstab (1, 101) mit zumindest einer in Messrichtung (X) verlaufenden ersten Teilungsspur (11), welche Markierungen mit einer ersten Teilungsperiode (T1) aufweist und einer parallel dazu verlaufenden zweiten Teilungsspur (12), welche Markierungen mit einer zweiten Teilungsperiode (T2) aufweist, wobei die erste Teilungsperiode (T1) von der zweiten Teilungsperiode (T2) geringfügig abweicht;
- einer Abtasteinheit (2, 102) mit einer ersten Empfängerspule (21) mit einer ersten Periode (P1) zur Abtastung der ersten Teilungsspur (11) und Erzeugung eines ersten periodischen Abtastsignals (A1) entsprechend der ersten Teilungsperiode (T1) und mit einer zweiten Empfängerspule (22) mit einer zweiten Periode (P2) zur Abtastung der zweiten Teilungsspur (22) und Erzeugung eines zweiten periodischen Abtastsignals (A2) entsprechend der zweiten Teilungsperiode (T2), wobei die erste Periode (P1) der ersten Empfängerspule (21) gleich der zweiten Periode (P2) der zweiten Empfängerspule (22) ist;
- einer Auswerteeinheit (3, 103), die dazu ausgelegt ist die Phasenlage des ersten Abtastsignals (A1) und die Phasenlage des zweiten Abtastsignals (A2) zu ermitteln und aus diesen Phasenlagen eine Absolutposition (AP) innerhalb eines Messbereichs mehrerer erster und zweiter Teilungsperioden zu bilden.

2. Induktive Positionsmesseinrichtung nach Anspruch 1, **dadurch gekennzeichnet, dass** innerhalb des Messbereichs eine gerade Anzahl von Teilungsperioden der ersten Teilungsspur (11) und eine ungerade Anzahl von Teilungsperioden der zweiten Teilungsspur (12) angeordnet sind.

3. Induktive Positionsmesseinrichtung nach Anspruch 2, **dadurch gekennzeichnet, dass** sich innerhalb des Messbereichs die Anzahl der Teilungsperioden der ersten Teilungsspur (11) von der Anzahl der Teilungsperioden der zweiten Teilungsspur (12) um 1 unterscheidet.

4. Induktive Positionsmesseinrichtung nach einem der vorhergehenden Ansprüche, **dadurch gekennzeichnet, dass** der Maßstab (101) zumindest eine weitere Teilungsspur (13) aufweist, deren Teilungsperiode (T3) von der Teilungsperiode (T1) der ersten Teilungsspur (11) sowie von der Teilungsperiode (T2) der zweiten Teilungsspur (T2) jeweils geringfügig abweicht, und dass die Abtasteinheit (102) zumindest eine weitere Empfängerspule (23) mit einer Periode (P3) zur Abtastung der weiteren Teilungsspur (13) und Erzeugung eines weiteren Abtastsignals (A3) aufweist, wobei die Periode (P3) der weiteren Empfängerspule (23) der ersten Periode (P1) und der zweiten Periode (P2) entspricht.

5. Induktive Positionsmesseinrichtung nach einem der vorhergehenden Ansprüche, **dadurch gekennzeichnet, dass** die Anzahl N der Perioden, die zur Generierung jeweils eines Abtastsignals (A2, A3) gleichzeitig abgetastet werden derart gewählt wird, dass bei einem gegebenen Mismatch der Amplitudenverlust des Abtastsignals (A2, A3) aufgrund des Mismatch im Vergleich ohne Mismatch kleiner 40% ist.

6. Induktive Positionsmesseinrichtung nach Anspruch 5, **dadurch gekennzeichnet, dass** die Anzahl N der Perioden zur Generierung jeweils eines der Abtastsignale (A2, A3) folgender Bedingung genügt:
1 < N < 50, und dass
die Periode (P2, P3) der Empfängerspule (22, 23) von der Teilungsperiode (T2, T3) der dieser Empfängerspule (22, 23) zugeordneten Teilungsspur (12, 13) um maximal 1% abweicht.

7. Induktive Positionsmesseinrichtung nach einem der vorhergehenden Ansprüche, **dadurch gekennzeichnet, dass** die den Teilungsspuren (11, 12, 13) zugeordneten Empfängerspulen (21, 22, 23) gleicher Perioden symmetrisch zu einer parallel zur Messrichtung X verlaufenden Symmetrielinie (S) angeordnet sind.

8. Induktive Positionsmesseinrichtung nach Anspruch 7, **dadurch gekennzeichnet, dass** die Abtasteinheit (102) eine Empfängerspule (24) aufweist, die in der Symmetrielinie (S) angeordnet ist.

9. Induktive Positionsmesseinrichtung nach Anspruch 8, **dadurch gekennzeichnet, dass** die Periode (P4) der in der Symmetrielinie (S) angeordneten Empfängerspule (24) von den Perioden (P1, P2) der ersten Empfängerspule (21) und der zweiten Empfängerspule (22) abweicht.

10. Induktive Positionsmesseinrichtung nach einem der vorhergehenden Ansprüche, **dadurch gekennzeichnet, dass** eine Umschalteinrichtung (5, 105) zur wahlweisen Umschaltung der Verarbeitung der Abtastsignale (A1 bis A4) von einer ersten Betriebsweise in eine zweite Betriebsweise vorgesehen ist, wobei in der ersten Betriebsweise die Abtasteinheit (2, 102) in einer ersten Lage relativ zum Maßstab (1, 101) ausgerichtet ist, und in der zweiten Betriebsweise die Abtasteinheit (2, 102) in einer zweiten Lage relativ zum Maßstab (1, 101) ausgerichtet ist, in welcher die Abtasteinheit (2, 102) gegenüber der ersten Lage um 180° verschwenkt ist.

11. Induktive Positionsmesseinrichtung nach Anspruch 10, **dadurch gekennzeichnet, dass** die Umschalteinrichtung (5) dazu ausgelegt ist, die erste und zweite Lage der Abtasteinheit (2) durch Auswertung von Abtastsignalen (A1, A2) der Abtasteinheit (2) zu detektieren.

12. Induktive Positionsmesseinrichtung nach Anspruch 11, **dadurch gekennzeichnet, dass** zumindest einer der Teilungsspuren (12) mehrere in Messrichtung X zueinander versetzte Empfängerspulen-Abschnitte (22.1, 22.2) zugeordnet sind, von denen jede ein Abtastteilsignal (A2.1, A2.2) generiert, und dass die Umschalteinrichtung (5) dazu ausgelegt ist aus diesen Abtastteilsignalen (A2.1, A2.2) die erste und zweite Lage der Abtasteinheit (2) zu detektieren.

13. Induktive Positionsmesseinrichtung nach einem der vorhergehenden Ansprüche, **dadurch gekennzeichnet, dass** zwei senkrecht zur Messrichtung X voneinander beabstandete Teilungsspuren (11.1, 11.2) des Maßstabs (101) die gleiche Teilungsperiode (P1) aufweisen und die Abtasteinheit (102) Empfängerspulen (51, 51.1) zur Generierung zweier Abtastsignale A1, A1.1) gleicher Periode (T1) aufweist.

14. Induktive Positionsmesseinrichtung nach Anspruch 13, **dadurch gekennzeichnet, dass** die Auswerteeinheit (103) dazu ausgelegt ist aus den zwei Abtastsignalen (A1, A1.1) gleicher Periode (T1) ein Maß für den Moirewinkel der Abtasteinheit (102) gegenüber dem Maßstab (101) zu ermitteln.

## Claims

1. Inductive position measurement device, comprising
- a scale (1, 101) with at least one first graduation track (11) extending in the measurement direction (X), said first graduation track having markings with a first graduation period (T1), and a second graduation track (12) extending parallel thereto, said second graduation track having markings with a second graduation period (T2), the first graduation period (T1) deviating slightly from the second graduation period (T2),
- a sensing unit (2, 102) with a first receiver coil (21) with a first period (P1) for sensing the first graduation track (11) and generating a first periodic sensing signal (A1) corresponding to the first graduation period (T1) and with a second receiver coil (22) with a second period (P2) for sensing the second graduation track (22) and generating a second periodic sensing signal (A2) corresponding to the second graduation period (T2), the first period (P1) of the first receiver coil (21) being equal to the second period (P2) of the second receiver coil (22);
- an evaluation unit (3, 103), configured to establish the phase angle of the first sensing signal (A1) and the phase angle of the second sensing signal (A2) and form an absolute position (AP) within a measurement region of a plurality of first and second graduation periods from these phase angles.

2. Inductive position measurement device according to Claim 1, **characterized in that** an even number of graduation periods of the first graduation track (11) and an odd number of graduation periods of the second graduation track (12) are arranged within the measurement region.

3. Inductive position measurement device according to Claim 2, **characterized in that** the number of graduation periods of the first graduation track (11) differs from the number of graduation periods of the second graduation track (12) by 1 within the measurement region.

4. Inductive position measurement device according to one of the preceding claims, **characterized in that** the scale (101) has at least one further graduation track (13), the graduation period (T3) of which in each case slightly deviating from the graduation period (T1) of the first graduation track (11) and from the graduation period (T2) of the second graduation track (T2), and **in that** the sensing unit (102) has at least one further receiver coil (23) with a period (P3) for sensing the further graduation track (13) and generating a further sensing signal (A3), the period (P3) of the further receiver coil (23) corresponding to the first period (P1) and the second period (P2).

5. Inductive position measurement device according to one of the preceding claims, **characterized in that** the number N of periods which are sensed simultaneously for generating one sensing signal (A2, A3) in each case are selected in such a way that, in the case of a given mismatch, the amplitude loss of the sensing signal (A2, A3) is less than 40% on account of the mismatch compared to without mismatch.

6. Inductive position measurement device according to Claim 5, **characterized in that** the number N of periods for generating one of the sensing signals (A2, A3) in each case satisfies the following condition:
1 < N < 50, and **in that**
the period (P2, P3) of the receiver coil (22, 23) deviates from the graduation period (T2, T3) of the graduation track (12, 13) assigned to this receiver coil (22, 23) by at most 1%.

7. Inductive position measurement device according to one of the preceding claims, **characterized in that** the receiver coils (21, 22, 23) with the same periods, assigned to the graduation tracks (11, 12, 13), are arranged symmetrically with respect to a line of symmetry (S) extending parallel to the measurement direction X.

8. Inductive position measurement device according to Claim 7, **characterized in that** the sensing unit (102) has a receiver coil (24) which is arranged on the line of symmetry (S).

9. Inductive position measurement device according to Claim 8, **characterized in that** the period (P4) of the receiver coil (24) arranged on the line of symmetry (S) deviates from the periods (P1, P2) of the first receiver coil (21) and the second receiver coil (22).

10. Inductive position measurement device according to one of the preceding claims, **characterized in that** provision is made for a switchover device (5, 105) for selective switching-over of the processing of the sensing signals (A1 to A4) from a first method of operation into a second method of operation, wherein, in the first method of operation, the sensing unit (2, 102) is aligned in a first position relative to the scale (1, 101) and, in the second method of operation, the sensing unit (2, 102) is aligned in a second position relative to the scale (1, 101), in which the sensing unit (2, 102) is pivoted by 180° in relation to the first position.

11. Inductive position measurement device according to Claim 10, **characterized in that** the switch-over device (5) is configured to detect the first and second positions of the sensing unit (2) by evaluating sensing signals (A1, A2) of the sensing unit (2).

12. Inductive position measurement device according to Claim 11, **characterized in that** a plurality of receiver coil portions (22.1, 22.2) offset from one another in the measurement direction X are assigned to at least one of the graduation tracks (12), each of which receiver coil portions generating a sensing partial signal (A2.1, A2.2), and **in that** the switch-over device (5) is configured to detect the first and second positions of the sensing unit (2) from these sensing partial signals (A2.1, A2.2).

13. Inductive position measurement device according to one of the preceding claims, **characterized in that** two graduation tracks (11.1, 11.2) of the scale (101), spaced apart from one another perpendicularly to the measurement direction X, have the same graduation period (P1) and the sensing unit (102) has receiver coils (51, 51.1) for generating two sensing signals (A1, A1.1) with the same period (T1).

14. Inductive position measurement device according to Claim 13, **characterized in that** the evaluation unit (103) is configured to establish a measure for the moiré angle of the sensing unit (102) with respect to the scale (101) from the two sensing signals (A1, A1.1) with the same period (T1).

## Revendications

1. Dispositif de mesure de position inductif, comportant
- un étalon (1, 101) ayant au moins une première piste de graduation (11) s'étendant dans la direction de mesure (X), qui présente des marquages ayant une première période de graduation (T1) et une deuxième piste de graduation (12) s'étendant parallèlement à celle-ci, qui présente des marquages ayant une deuxième période de graduation (T2), dans lequel la première période de graduation (T1) s'écarte légèrement de la deuxième période de graduation (T2) ;
- une unité de balayage (2, 102) comportant une première bobine de réception (21) ayant une première période (P1) pour balayer la première piste de graduation (11) et générer un premier signal de balayage périodique (A1) d'une manière qui correspond à la première période de graduation (T1) et comportant une deuxième bobine de réception (22) ayant une deuxième période (P2) pour balayer la deuxième piste de graduation (22) et générer un deuxième signal de balayage périodique (A2) d'une manière qui correspond à la deuxième période de graduation (T2), dans lequel la première période (P1) de la première bobine de réception (21) est égale à la deuxième période (P2) la deuxième bobine de réception (22) ;
- une unité d'évaluation (3, 103) qui est conçue pour déterminer la position de phase du premier signal de balayage (A1) et la position de phase du deuxième signal de balayage (A2) et établir à partir desdites positions de phase une position absolue (AP) à l'intérieur d'une région de mesure de plusieurs premières et deuxièmes périodes de graduation.

2. Dispositif de mesure de position inductif selon la revendication 1, **caractérisé en ce qu'**un nombre pair de périodes de graduation de la première piste de graduation (11) et un nombre impair de périodes de graduation de la deuxième piste de graduation (12) sont disposées à l'intérieur de la région de mesure.

3. Dispositif de mesure de position inductif selon la revendication 2, **caractérisé en ce que** le nombre des périodes de graduation de la première piste de graduation (11) diffère de 1 par rapport au nombre des périodes de graduation de la deuxième piste de graduation (12) à l'intérieur de la région de mesure.

4. Dispositif de mesure de position inductif selon l'une quelconque des revendications précédentes, **caractérisé en ce que** l'étalon (101) comporte au moins une autre piste de graduation (13) dont la période de graduation (T3) s'écarte respectivement faiblement de la période de graduation (T1) de la première piste de graduation (11) ainsi que de la période de graduation (T2) de la deuxième piste de graduation (T2), et **en ce que** l'unité de balayage (102) comporte au moins une autre bobine de réception (23) de période (P3) pour balayer l'autre piste de graduation (13) et générer un autre signal de balayage (A3), dans lequel la période (P3) de l'autre bobine de réception (23) correspond à la première période (P1) et à la deuxième période (P2).

5. Dispositif de mesure de position inductif selon l'une quelconque des revendications précédentes, **caractérisé en ce que** le nombre N des périodes qui sont balayées simultanément pour générer un signal de balayage respectif (A2, A3) est sélectionné de manière à ce que, pour une désadaptation donnée, la perte d'amplitude du signal de balayage (A2, A3) due à la désadaptation, soit inférieure à 40 % par comparaison à l'absence de désadaptation.

6. Dispositif de mesure de position inductif selon la revendication 5, **caractérisé en ce que** le nombre N des périodes destinées à générer un signal de balayage respectif (A2, A3) satisfait à la condition suivante :
1 < N < 50, et **en ce que**
la période (P2, P3) de la bobine de réception (22, 23) s'écarte au maximum de 1 % de la période de graduation (T2, T3) de la piste de graduation (12, 13) associée à ladite bobine de réception (22, 23).

7. Dispositif de mesure de position inductif selon l'une quelconque des revendications précédentes, **caractérisé en ce que** les bobines de réception (21, 22, 23) associées aux pistes de graduation (11, 12, 13) ayant les mêmes périodes sont disposées symétriquement par rapport à une ligne de asymétrie (S) s'étendant parallèlement à la direction de mesure X.

8. Dispositif de mesure de position inductif selon la revendication 7, **caractérisé en ce que** l'unité de balayage (102) comporte une bobine de réception (24) qui est disposée sur la ligne de symétrie (S).

9. Dispositif de mesure de position inductif selon la revendication 8, **caractérisé en ce que** la période (P4) de la bobine de réception (24) disposée sur la ligne de symétrie (S) s'écarte des périodes (P1, P2) de la première bobine de réception (21) et de la deuxième bobine de réception (22).

10. Dispositif de mesure de position inductif selon l'une quelconque des revendications précédentes, **caractérisé en ce qu'**il est prévu un dispositif de basculement (5, 105) destiné à faire basculer sélectivement le traitement des signaux de balayage (A1 à A4) d'un premier mode de fonctionnement à un deuxième mode de fonctionnement, dans lequel, dans le premier mode de fonctionnement, l'unité de balayage (2, 102) est dirigée vers une première position, par rapport à l'étalon (1, 101) et, dans le deuxième mode de fonctionnement, l'unité de balayage (2, 102) est dirigée vers une deuxième position, par rapport à l'étalon (1, 101), à laquelle l'unité de balayage (2, 102) est pivotée de 180° par rapport à la première position.

11. Dispositif de mesure de position inductif selon la revendication 10, **caractérisé en ce que** le dispositif de basculement (5) est conçu pour détecter les première et deuxième positions de l'unité de balayage (2) en évaluant des signaux de balayage (A1, A2) de l'unité de balayage (2).

12. Dispositif de mesure de position inductif selon la revendication 11, **caractérisé en ce que** plusieurs sections de bobines de réception (22.1, 22.2) décalées les unes par rapport aux autres dans la direction de mesure X sont associées à au moins l'une des pistes de graduation (12), dont chacune génère un signal de balayage partiel respectif (A2.1, A2.2), et **en ce que** le dispositif de basculement (5) est conçu pour détecter les premières et deuxième positions de l'unité de balayage (2) à partir desdits signaux de balayage partiels (A2.1, A2.2).

13. Dispositif de mesure de position inductif selon l'une quelconque des revendications précédentes, **caractérisé en ce que** deux pistes de graduation (11.1, 11.2) de l'étalon (101), espacées l'une de l'autre perpendiculairement à la direction de mesure X, présentent la même période de graduation (P1) et l'unité de balayage (102) comporte des bobines de réception (51, 51.1) destinées à générer deux signaux de balayage (A1, A1.1) de même période (T1).

14. Dispositif de mesure de position inductif selon la revendication 13, **caractérisé en ce que** l'unité d'évaluation (103) est conçue pour déterminer, à partir des deux signaux de balayage (A1, A1.1) de même période (T1) une mesure d'un angle de moiré de l'unité de balayage (102) par rapport à l'étalon (101).
